# EUROPÄISCHE PATENTSCHRIFT

(11) **EP 1 514 670 B1**
(45) Veröffentlichungstag und Bekanntmachung des Hinweises auf die Patenterteilung: **14.05.2008**
(21) Anmeldenummer: 04400007.3
(22) Anmeldetag: 20.02.2004
(51) Int. Cl.: B29C 65/08

(54) **Vorrichtung zum kontinuierlichen Verbinden und/oder Verfestigen von Materialbahnen mittels Ultraschall**
Apparatus for continuously bonding and/or consolidating of web material by ultrasonics
Appareil pour la liaison et/ou la consolidation en continu de matériaux en bandes par ultrasons

(30) Priorität: 13.08.2003 DE 10337740; 11.09.2003 DE 10343325
(43) Veröffentlichungstag der Anmeldung: 16.03.2005
(60) Teilanmeldung: 07021514.0
(73) Patentinhaber: Herrmann Ultraschalltechnik GmbH & Co. KG, 76307 Karlsbad-Ittersbach (DE)
(72) Erfinder: Schneider, Arnold, 76275 Ettlingen-Schluttenbach (DE); Gmeiner, Josef, 92729 Weiherhammer (DE)
(74) Vertreter: Dreiss, Fuhlendorf, Steimle & Becker

(56) Entgegenhaltungen:
- WO-A-01/94099
- WO-A-97/27005
- WO-A-98/28123
- DE-A1- 2 944 080
- US-A- 4 414 045
- US-A- 5 645 681
- US-B1- 6 454 890

## Beschreibung

Die Erfindung betrifft eine Vorrichtung zum kontinuierlichen Verbinden und/oder Verfestigen von Materialbahnen mittels Ultraschall mit den Merkmalen des Oberbegriffs des Anspruchs 1.

Es ist bekannt, dass zum kontinuierlichen Verfestigen und/oder Verbinden von Materialbahnen diese zwischen einer rotierenden Walze und einer feststehenden oder ebenfalls rotierenden Sonotrode hindurchgeführt und dabei bearbeitet werden. Bei feststehenden Sonotroden können große Materialbreiten abgedeckt werden, jedoch entsteht zwischen der Sonotrode und der bewegten Materialbahn eine Reibkraft, die sich negativ auf das Schweißergebnis auswirkt. Außerdem bedingt die Reibkraft sowohl eine Erwärmung der Materialbahnen als auch eine Erwärmung der Sonotrode, wodurch der eingestellte Spalt verändert wird.

Mit rotierenden Sonotroden kann zwar der oben beschriebene Nachteil der Reibung verhindert werden, jedoch sind nur geringe Schweißbreiten realisierbar. Aus der US-B-6,457,626 ist eine Sonotrode mit einer Breite bekannt, die kleiner als Lambda halbe ist. Dies trifft auch für die aus der US 5,707,483 und der US 6,547,903 bekannten Vorrichtungen zu. Aus der US-B-6,454,890 ist es bekannt, bei Werkstücke, die breiter sind als die Länge der Sonotrode, mehrere Sonotroden hintereinander und auf Lücke zueinander anzuordnen. Eine gleichmäßige Verschweißung kann hierdurch aber nicht erzielt werden.

Aus der US 5,645,681 ist es bekannt, mehrere Sonotroden auf Versatz zueinander und teilweise sich überlappend anzuordnen, um eine größere Schweißbreite zu realisieren. Bei der WO-A-98 28 123 sind mehrere Sonotroden auf Lücke zueinander angeordnet.

Der Erfindung liegt daher die Aufgabe zugrunde, eine Vorrichtung zum kontinuierlichen Verfestigen und/oder Verbinden von Materialbahnen bereit zu stellen, mit der breite Materialbahnen möglichst gleichmäßig bearbeitet werden können.

Diese Aufgabe wird mit einer Vorrichtung gelöst, die die Merkmale des Anspruchs 1 aufweist. Weitere Ausgestaltungen der Erfindung sind in den Unteransprüchen dargestellt.

Die als rotierende Walze ausgebildete Sonotrode besitzt eine Länge, die Lambda-halbe entspricht oder einem Vielfachen von Lambda-halbe der aufgezwungenen Schwingung ist. Die Länge der rotierenden Walze hängt somit im Wesentlichen vom eingesetzten Material und der gewünschten Arbeitsfrequenz ab. Durch die Vervielfachung der Länge der rotierenden Walze auf ein Vielfaches von Lambda-halbe der Schwingung können auch sehr breite Materialbahnen bearbeitet werden, ohne dass hierfür mehrere einzelne Sonotroden verwendet werden müssten. Am Gegendruckwerkzeug liegen wenigstens zwei rotierende Walzen an, die hintereinander geschaltet sind, wobei insbesondere die beiden hintereinandergeschalteten Walzen um einen Betrag (Δl) in Achsrichtung zueinander versetzt sind. Hierdurch kann auf einfache Weise der Energieeintrag erhöht und die Verteilung der Energie verbessert werden.

Eine gleichmäßige Verschweißung wird erfindungsgemäß dadurch erzielt, dass der Betrag (Δl) einer Lambda-viertel Welle der aufgezwungenen Schwingung (Δl = λ/4) entspricht. Mit der erfindungsgemäßen Vorrichtung können die Materialbahnen auch getrocknet werden.

Bei einer Weiterbildung ist vorgesehen, dass zwischen dem Amplitudentransformationsstück und der rotierenden Walze Radiallager vorgesehen sind. Diese Radiallager sind insbesondere in einem Schwingungsknoten der Longitudinalschwingung angeordnet, sodass keine oder vernachlässigbar geringe Schwingungsamplituden auf die Lager wirken.

Mit Vorzug sind beidseits der rotierenden Walze ein Amplitudentransformationsstück und ein Ultraschallkonverter vorgesehen. Abhängig von der benötigten Energie, mit deren die Materialbahnen verfestigt oder miteinander verbunden werden sollen, kann entweder ein Konverter oder können zwei Konverter vorgesehen sein, wobei die Amplitudentransformationsstücke auswechselbar angeordnet, insbesondere eingeschraubt sind. Sie können aus dem gleichen Material bestehen, wie die rotierende Walze.

Bei einem Ausführungsbeispiel sind die beiden Amplitudentransformationsstücke und die Walze in einem einzigen Bauteil vereint. Hierdurch werden höhere Festigkeiten erzeugt und es besteht keine Gefahr, dass sich die Amplitudentransformationsstücke von der Walze lösen.

Mit Vorzug ist das Gegendruckwerkzeug eine rotierende Gegendruckwalze. Zwei gegenläufige Walzen bieten den Vorteil, dass die Reibung auf ein Minimum begrenzt wird und dass die Materialbahnen sehr schonend behandelt werden, ohne dass die Bearbeitung zu Formatänderungen führt.

Eine Variante sieht vor, dass die Gegendruckwalze als aktive Walze ausgebildet ist und zwei Amplitudentransformationsstücke und wenigstens einen Konverter aufweist. Dabei besitzt jede Walze ihren eigenen Konverter.

Dabei kann die Außenoberfläche entweder der rotierenden Walze oder der Gegendruckwalze glatt oder gemustert sein. Bei einer gemusterten Walze kann nun den Materialbahnen eine Struktur aufgeprägt werden, die zu einer noch innigeren Verbindung führt. Die Struktur kann eine Noppenstruktur, Waffelstruktur, Linienstruktur oder ein Fantasiemuster sein.

Bei einem anderen Ausführungsbeispiel ist das Gegendruckwerkzeug feststehend und insbesondere als Messer, Klinge oder dergleichen ausgebildet. Dabei erstreckt sich das Messer, die Klinge oder dergleichen in tangentialer Richtung, sodass die Verfestigung oder Verbindung der Materialbahnen miteinander linienförmig erfolgt.

In bekannterweise ist die Spalthöhe zwischen der rotierenden Walze und dem Gegendruckwerkzeug einstellbar. Dabei kann die Einstellung geregelt sein, sodass die Spalthöhe konstant gehalten wird. Insbesondere bei Temperaturänderungen ist dies von Vorteil, da sich die Temperaturänderungen dann nicht in einer Änderung der Spalthöhe niederschlagen.

Bei einer Weiterbildung ist vorgesehen, dass der von der rotierenden Walze auf die Materialbahn ausgeübte Druck einstellbar ist. Insbesondere kann auch eine Druckregelung vorgesehen sein, sodass die Materialbahnen stets mit gleichbleibendem Druck beaufschlagt werden.

Eine bevorzugte Ausführungsform sieht vor, dass die rotierende Walze von einer Hülse mit jeweils einem Stirnzapfen gebildet wird. Eine derart ausgebildete Sonotrode ist zum einen leicht, zum anderen besitzt sie hervorragende Schwingungseigenschaften, da der Schwingungsbauch der Querschwingung bei einer Länge von Lambda-halbe in der Mitte der Hülse liegt.

Vorteilhaft ist die rotierende Walze kühlbar oder heizbar. Hierdurch kann gezielt Wärme ausgetragen oder eingetragen werden, wodurch Schweißbedingungen konstant gehalten werden können.

Erfindungsgemäß ist der Durchmesser (D) der rotierenden Walze teilweise eingeschnürt, wobei insbesondere die Einschnürung (E) betragsmäßig einem Teil einer Lambda-halbe Welle der aufgezwungenen Schwingung entspricht (E = |x|·λ/2). Im schwingenden Zustand nimmt die rotierende Walze dann zeitweise die Zylinderform an, wodurch eine bessere Druckverteilung erreicht wird.

Vorteilhaft ist die rotierende Walze im Durchmesser derart aufgedickt, dass sich eine gleichmäßige Anpresskraftverteilung über deren Länge ergibt. Diese Maßnahme trägt ebenfalls zu einer Vergleichmäßigung der Druckverteilung über die gesamte Walzenlänge bei, da die Verformung der Walze durch die Anpresskraft kompensiert wird. Insbesondere wird dies dadurch erreicht, dass die rotierende Walze eine Bombage aufweist. Die Durchmesseränderung der rotierenden Walze entspricht dabei exakt der Biegelinie.

Eine weitere Maßnahme zur Vergleichmäßigung der Druckverteilung ist, dass die Achse der rotierenden Walze und des als Gegendruckwalze ausgebildeten Gegendruckwerkzeugs windschief zueinander stehen.

Weiter Vorteile und Einzelheiten der Erfindung ergeben sich aus der nachfolgenden Beschreibung, in der unter Bezugnahme auf die Zeichnung die Erfindung im Einzelnen beschrieben ist.

In der Zeichnung zeigen:
- Figur 1: eine perspektivische Ansicht einer.bekannten Ausführungsform mit als Gegendruckwalze ausgebildetem Gegendruckwerkzeug;
- Figur 2: einen Schnitt II-II gemäß Figur 1;
- Figur 3: einen Längsschnitt durch die rotierende Walze;
- Figur 4: eine Seitenansicht der Sonotrode mit Amplitudentransformationsstücken;
- Figur 5: ein Schaubild, die in Querrichtung und in Längsrichtung verlaufenden Schwingungen zeigend;
- Figur 6: eine perspektivische Ansicht einer Ausführungsform der Erfindung mit zwei rotierenden Walzen;
- Figur 7: eine Seitenansicht in Richtung des Pfeils VII gemäß Figur 6;
- Figur 8: eine Ausführungsform mit zwei versetzt zueinander angeordneten rotierenden Walzen;
- Figur 9: eine Seitenansicht einer eine Einschnürungen aufweisenden rotierenden Walze;
- Figur 10: eine Draufsicht auf eine rotierenden Walze und eine Gegendruckwalze mit windschief zueinander stehen Achsen;
- Figur 11: eine Seitenansicht in Richtung des Pfeils XI gemäß Figur 10; und
- Figur 12: eine vergrößerte Wiedergabe des Ausschnitts XII gemäß Figur 11.

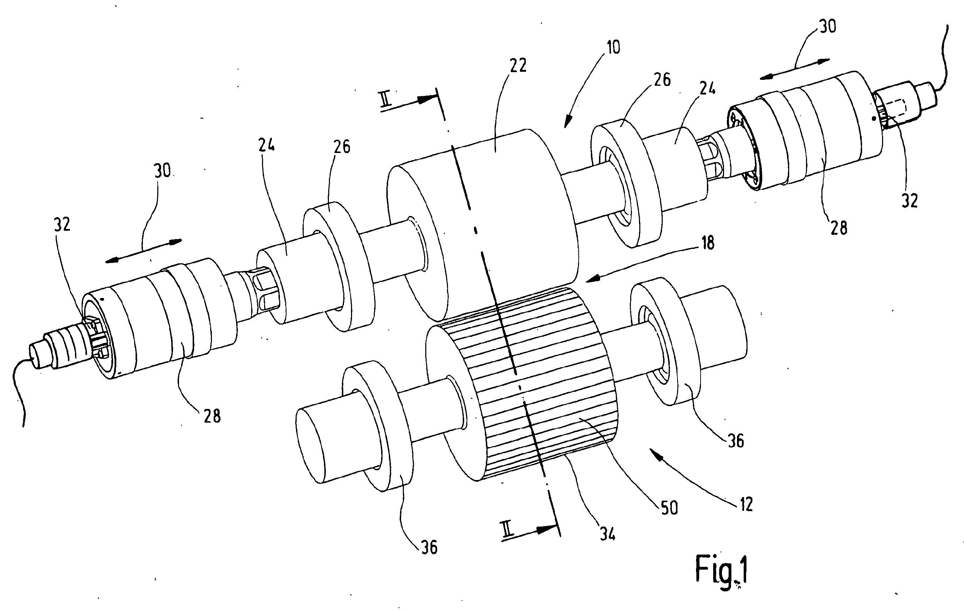

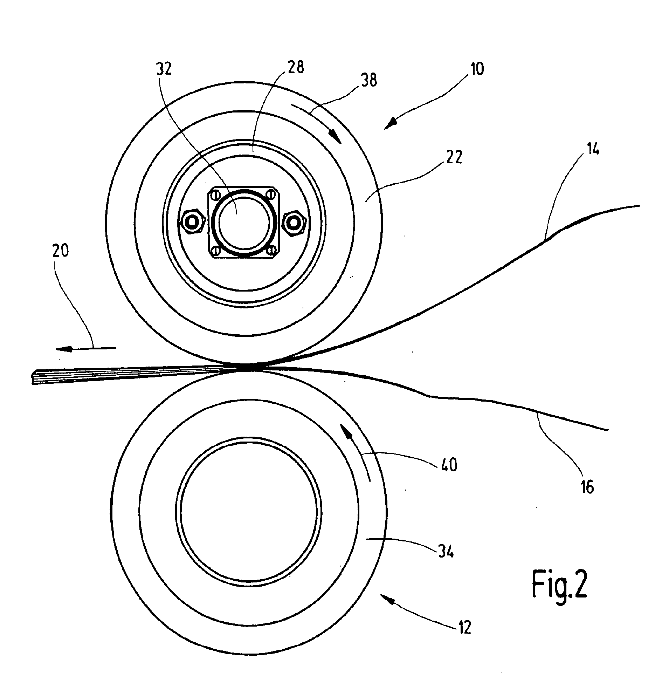

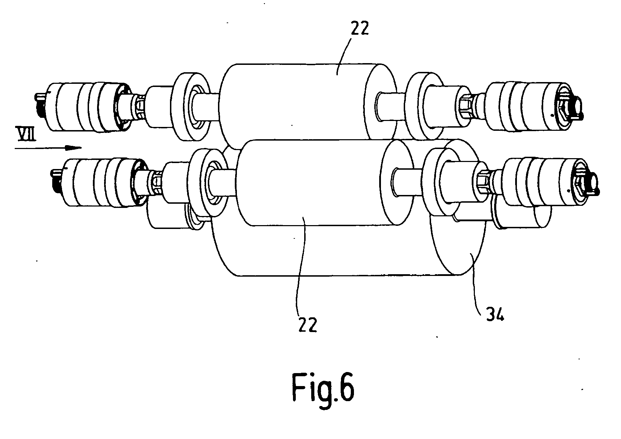

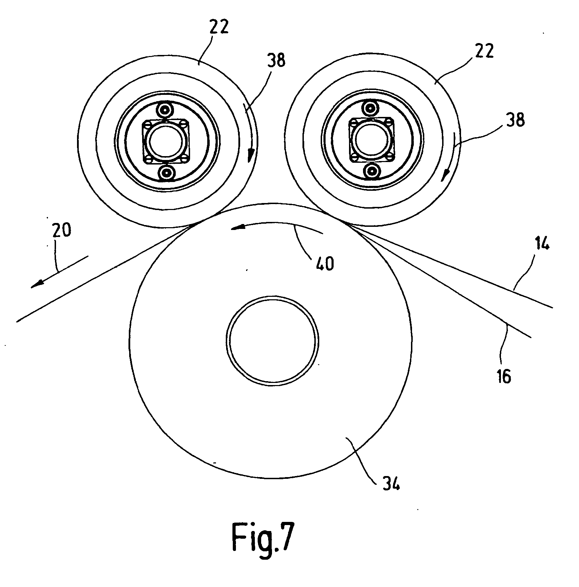

In den Figuren 1 bis 5 wird zum Verständnis der Erfindung, zu der Ausführungsbeispiele in den Figuren 6 bis 12 dargestellt sind, der Stand der Technik gezeigt, wobei in den Figuren 1 und 2 insgesamt mit 10 und 12 zwei rotierende Bauteile erkennbar sind, zwischen welchen zwei oder mehrere Materialbahnen 14 und 16 hindurchgeführt werden, wobei die beiden Materialbahnen 14 und 16 beim Durchtritt durch einen insgesamt mit 18 bezeichneten Arbeitsspalt miteinander verbunden und/oder verfestigt werden. Die Durchlaufrichtung ist mit dem Pfeil 20 angedeutet.

Das Bauteil 10 weist eine zentrale rotierende Walze 22 auf, an welche sich beidseits Amplitudentransformationsstücke 24 anschließen, an welchen Radiallager 26 vorgesehen sind. Die Amplitudentransformationsstücke 24 sind mit Ultraschallkonvertern 28 gekoppelt, über welche eine mechanische Schwingung in longitudinaler Richtung, das heißt in Richtung des Doppelpfeils 30 erzeugt werden. An den stirnseitigen Enden der Ultraschallkonverter 28 sind Drehkoppler 32 vorgesehen, über welche die Ultraschallkonverter 28 mit Spannung versorgt werden.

Der rotierenden Walze 22 gegenüberliegend ist eine Gegendruckwalze 34 angeordnet, die ebenfalls über Radiallager 36 drehbar gelagert ist. Die Oberfläche der Gegendruckwalze 34 weist in Längsrichtung verlaufende Rippen 50 auf, die der Gegendruckwalze eine Struktur verleihen, die beim Verbinden der beiden Materialbahnen 14 und 16 auf diese übertragen wird.

In der Figur 2 sind mit den Pfeilen 38 und 40 die Drehrichtungen der rotierenden Walze 22 und der Gegendruckwalze 34 angedeutet. Außerdem ist der Drehkoppler 32 erkennbar, über welchen der Ultraschallkonverter 28 mit Spannung versorgt wird.

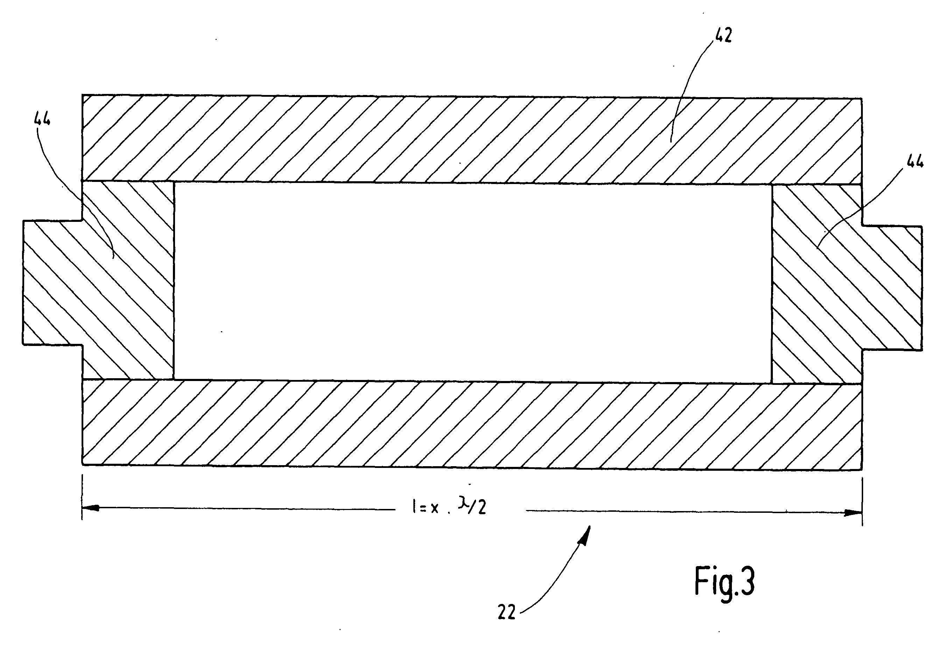

Die Figur 3 zeigt einen Längsschnitt durch die rotierende Walze 22, die beim dargestellten Ausführungsbeispiel von einer Hülse 42 gebildet wird, welche von jeweils einem Stirnzapfen 44 verschlossen ist. An diesen Stirnzapfen 44 schließen sich die (in der Figur 3 nicht dargestellten) Amplitudentransformationsstücke 24 an.

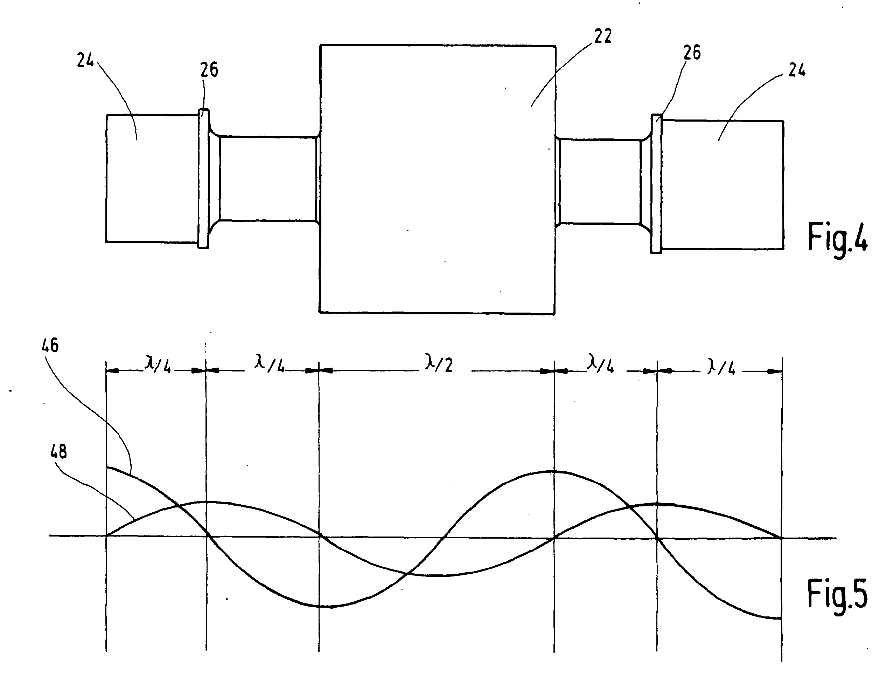

Die Figur 4 zeigt eine Seitenansicht der rotierenden Walze 22 mit den seitlich angeschlossenen Amplitudentransformationsstücken 24 sowie den Radiallagern 26. Beim dargestellten Ausführungsbeispiel entspricht die Länge 1 der rotierenden Walze 22 Lambda-halbe (λ/2) der durch die Amplitudentransformationsstücke 24 aufgezwungenen Schwingung der rotierenden Walze 22. Die beiden Radiallager 26 sind Lambda-viertel (λ/4) von den Stirnseiten der rotierenden Walze 22 entfernt und die beiden Amplitudentransformationsstücke 24 erstreckten sich um Lambda-viertel (λ/4) über die Radiallager 26 hinaus.

Das in Figur 5 dargestellte Schaubild zeigt mit dem Bezugszeichen 46 die Longitudinalschwingung, die von den Amplitudentransformationsstücken 24 erzeugt wird. Um Lambda-viertel (λ/4) versetzt hierzu verläuft die Querschwingung 48, die eine Schwingung der rotierenden Walze 22 in radialer Richtung bewirkt, und mit der der Schweißvorgang durchgeführt wird.

In der Figur 4 beträgt die Länge l der rotierenden Walzen 22 Lambda-halbe (λ/2), wobei die Länge l auch ein vielfaches hiervon betragen kann, wie in Figur 3 angedeutet. Auf diese Weise wird die Möglichkeit geschaffen, auch Materialbahn 14 und 16 miteinander zu verbinden, deren Breite größer ist als Lambda-halbe.

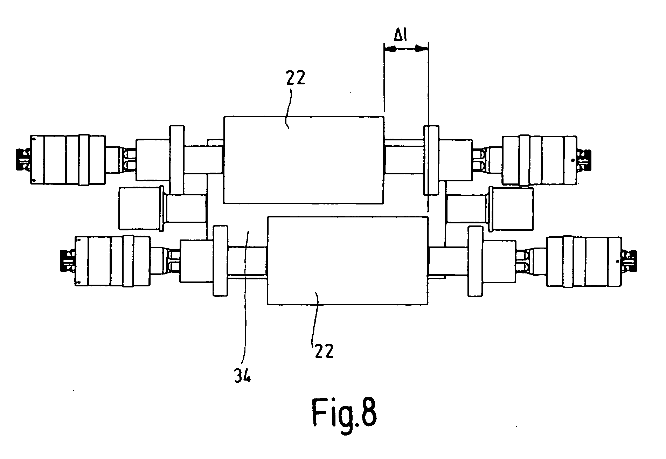

In den Figuren 6 bis 8, die ein erstes Ausführungsbeispiel der Erfindung zeigen, sind um die Gegendruckwalze 34 zwei rotierende Walzen 22 angeordnet, wobei die rotierenden Walzen 22 um einen Winkelversatz von 50° bis 60° hintereinander angeordnet und außerdem in axialer Richtung um einen Betrag von Δl = λ/4 zueinander versetzt sind, was sich deutlich aus Figur 8 ergibt. Die beiden rotierenden Walzen 22 können identisch ausgebildet sein und werden vom gleichen Frequenzgenerator angetrieben oder schwingen gleichsinnig.

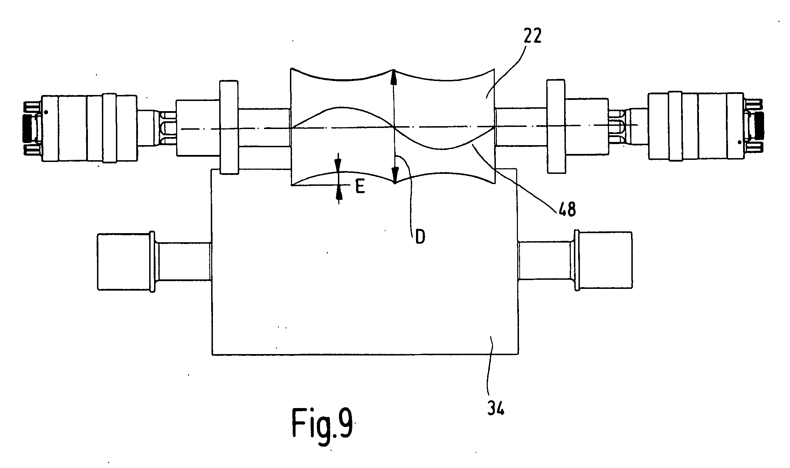

In der Figur 9 weist die rotierende Walze 22 eine Einschnürung E auf, wodurch der Durchmesser D über die Länge der Walze 22 gezielt reduziert wird. In der Figur 9 ist außerdem die Querschwingung 48 der Walze 22 schaubildlich dargestellt. Es ist erkennbar, dass die Einschnürung E immer dort am größten ist, wo sich ein Schwingungsbauch befindet. Die Einschnürung E ist also betragsmäßig das Produkt aus einer Konstanten und Lambda-halbe (E = |x|·λ/2). Wird die rotierende Walze 22 in Schwingung versetzt, dann nimmt sie zeitweise die Zylinderform an.

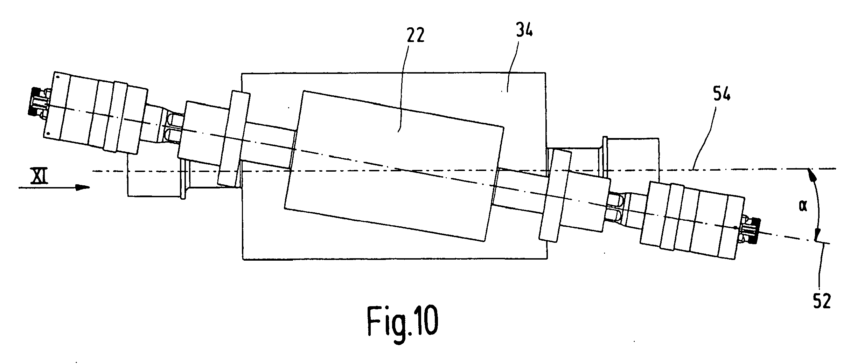

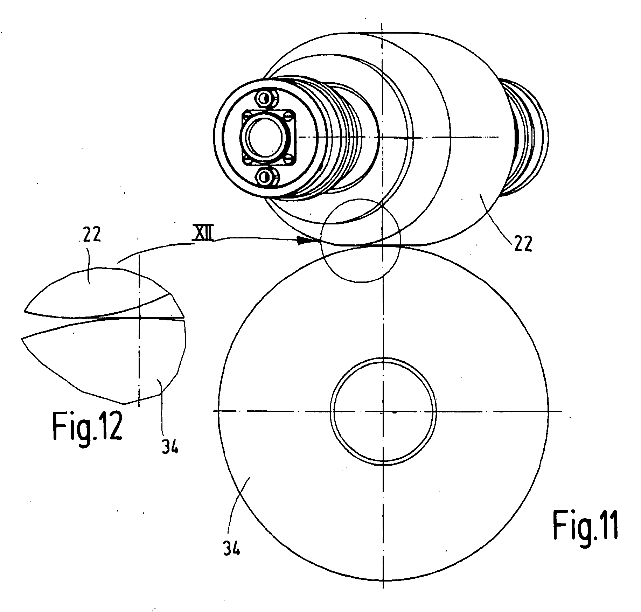

In den Figuren 10 bis 12 ist eine der beiden rotierenden Walzen 22 schräg gestellt, so dass deren Längsachse 52 windschief zur Längsachse 54 der Gegendruckwalze 34 steht. Der Schrägungswinkel ist in Figur 10 mit α bezeichnet. Der in Figur 11 mit XII gekennzeichnete Ausschnitt ist in Figur 12 vergrößert dargestellt und es ist deutlich erkennbar, dass die Berührungslinie der beiden Walzen nicht achsparallel sondern schräg verläuft. Dadurch kann der Anpressdruck vergleichmäßigt werden.

## Patentansprüche

1. Vorrichtung zum kontinuierlichen Verbinden und/oder Verfestigen von Materialbahnen (14, 16) mittels Ultraschall mit einer als rotierende Walze (22) ausgebildeten Sonotrode, einem der rotierenden Walze (22) radial gegenüberliegenden Gegendruckwerkzeug, einem axial an die rotierende Walze (22) angesetzten Amplitudentransformationsstück (24), und einem sich an das Amplitudentransformationsstück (24) anschließenden Ultraschallkonverter (28) mit einer Spannungsversorgung, wobei die Länge (l) der rotierenden Walze (22) einer Lambda-halbe Welle der aufgezwungenen Schwingung oder einem Vielfachen davon entspricht (l = n · λ/2), wobei am Gegendruckwerkzeug wenigstens zwei rotierende Walzen (22) anliegen, die hintereinander geschaltet sind und die beiden hintereinandergeschalteten Walzen (22) um einen Betrag (Δl) in Achsrichtung zueinander versetzt sind, **dadurch gekennzeichnet, dass** der Betrag (Δl) einer Lambda-viertel Welle der aufgezwungenen Schwingung entspricht (Δl = λ/4).

2. Vorrichtung nach Anspruch 1, **dadurch gekennzeichnet, dass** zwischen dem Amplitudentransformationsstück (24) und der rotierenden Walze (22) Radiallager (26) vorgesehen sind.

3. Vorrichtung nach einem der vorhergehenden Ansprüche, **dadurch gekennzeichnet, dass** beidseits der rotierenden Walze (22) ein Amplitudentransformationsstück (24) und ein Ultraschallkonverter (28) vorgesehen sind.

4. Vorrichtung nach einem der vorhergehenden Ansprüche, **dadurch gekennzeichnet, dass** das Gegendruckwerkzeug eine rotierende Gegendruckwalze (34) ist.

5. Vorrichtung nach einem der vorhergehenden Ansprüche, **dadurch gekennzeichnet, dass** die Außenoberfläche der rotierenden Walze (22) und/oder Gegendruckwalze (34) glatt oder gemustert ist.

6. Vorrichtung nach einem der Ansprüche 1 bis 4, **dadurch gekennzeichnet, dass** das Gegendruckwerkzeug feststehend und insbesondere ein Messer, eine Klinge oder dergleichen ist.

7. Vorrichtung nach Anspruch 6, **dadurch gekennzeichnet, dass** das Messer, die Klinge oder dergleichen sich in tangentialer Richtung bezüglich der rotierenden Walze (22) erstrecken.

8. Vorrichtung nach einem der vorhergehenden Ansprüche, **dadurch gekennzeichnet, dass** die Höhe des Arbeitsspaltes (18) zwischen der rotierenden Walze (22) und dem Gegendruckwerkzeug einstellbar ist.

9. Vorrichtung nach einem der vorhergehenden Ansprüche, **dadurch gekennzeichnet, dass** der von der rotierenden Walze (22) auf die Materialbahn (14, 16) ausgeübte Druck einstellbar ist.

10. Vorrichtung nach einem der vorhergehenden Ansprüche, **dadurch gekennzeichnet, dass** die rotierende Walze (22) von einer Hülse (42) mit jeweils einem Stirnzapfen (44) gebildet wird.

11. Vorrichtung nach einem der vorhergehenden Ansprüche, **dadurch gekennzeichnet, dass** die rotierende Walze (22) kühlbar oder heizbar ist.

12. Vorrichtung nach einem der vorhergehenden Ansprüche, **dadurch gekennzeichnet, dass** die Gegendruckwalze (34) als aktive Walze mit einem Amplitudentransformationsstück (24) und einem sich daran anschließenden Ultraschallkonverter (28) ausgebildet ist.

13. Vorrichtung nach einem der vorhergehenden Ansprüche, **dadurch gekennzeichnet, dass** der Durchmesser (D) der rotierenden Walze (22) teilweise eingeschnürt ist.

14. Vorrichtung nach Anspruch 13, **dadurch gekennzeichnet, dass** die Einschnürung (E) betragsmäßig einem Teil einer Lambda-halbe Welle der aufgezwungenen Schwingung entspricht (E = |x|·λ/2).

15. Vorrichtung nach einem der vorhergehenden Ansprüche, **dadurch gekennzeichnet, dass** die rotierende Walze (22) im Durchmesser derart aufgedickt ist, dass sich eine gleichmäßige Anpresskraftverteilung über deren Länge ergibt.

16. Vorrichtung nach einem der vorhergehenden Ansprüche, **dadurch gekennzeichnet, dass** die rotierende Walze (22) eine Bombage aufweist.

17. Vorrichtung nach einem der vorhergehenden Ansprüche, **dadurch gekennzeichnet, dass** die Durchmesseränderung der rotierenden Walze (22) der Biegelinie entspricht.

18. Vorrichtung nach einem der vorhergehenden Ansprüche, **dadurch gekennzeichnet, dass** die Achse der rotierenden Walze (22) und des als Gegendruckwalze (34) ausgebildeten Gegendruckwerkzeugs windschief zueinander stehen.

## Claims

1. An apparatus for the continuous bonding and/or consolidating of web materials (14, 16) by ultrasonics having an ultrasonic horn configured as a rotating roller (22), an anvil disposed radially opposite the rotating roller (22), an amplitude transformer (24) mounted axially on the rotating roller (22), and an ultrasonic converter (28) attached to the amplitude transformer (24) with an energy supply, wherein the length (l) of the rotating roller (22) equals to a lambda-half wave of the imposed oscillation or a multiple thereof (l = n · λ/2), wherein at least two rotating rollers (22), arranged in tandem, contact the anvil and the two rollers (22) arranged in tandem are offset to each other in the axial direction by an amount (Δl), **characterized in that** the amount (Δl) equals a lambda-fourth wave of the imposed oscillation (Δl = λ/4).

2. Apparatus according to claim 1, **characterized in that** radial bearings (26) are disposed between the amplitude transformer (24) and the rotating roller (22).

3. Apparatus according to one of the preceding claims, **characterized in that** an amplitude transformer (24) and an ultrasonic converter (28) are provided on both sides of the rotating roller (22).

4. Apparatus according to one of the preceding claims, **characterized in that** the anvil is a rotating counter-roller (34).

5. Apparatus according to one of the preceding claims, **characterized in that** the outer surface of one of the rotating roller (22) and/or of the counter-roller (34) is smooth or patterned.

6. Apparatus according to one of claims 1 to 4, **characterized in that** the anvil is fixed and is particularly a knife, a blade or the like.

7. Apparatus according to claim 6, **characterized in that** the knife, the blade or the like extends in a tangential direction respective to the rotating roller (22).

8. Apparatus according to one of the preceding claims, **characterized in that** the hight of the working gap (18) between the rotating roller (22) and the anvil is adjustable.

9. Apparatus according to one of the preceding claims, **characterized in that** the pressure exerted by the rotating roller (22) on the web materials (14, 16) is adjustable.

10. Apparatus according to one of the preceding claims, **characterized in that** the rotating roller (22) is formed by a hollow shaft (42) with trunnions (44).

11. Apparatus according to one of the preceding claims, **characterized in that** the rotating roller (22) can be cooled or heated.

12. Apparatus according to one of the preceding claims, **characterized in that** the counter-roller (34) is configured as an active roller with an amplitude transformer (24) and an ultrasonic converter (28) attached thereto.

13. Apparatus according to one of the preceding claims, **characterized in that** the diameter of the rotating roller is partially constricted.

14. Apparatus according to claim 13, **characterized in that** the constriction (E) equals one part of a lambda-half wave of the imposed oscillation (E = |x| · λ/2).

15. Apparatus according to one of the preceding claims, **characterized in that** the diameter of the rotating roller (22) is made thicker such that pressure is equally distributed along its length.

16. Apparatus according to one of the preceding claims, **characterized in that** the rotating roller (22) has a convex curvature.

17. Apparatus according to one of the preceding claims, **characterized in that** the change in diameter of the rotating roller (22) corresponds to the bending line.

18. Apparatus according to one of the preceding claims, **characterized in that** the axes of the rotating roller (22) and the anvil tool built as a counter-roller (34) are skewed relative to each other.

## Revendications

1. Dispositif permettant la liaison et/ou la consolidation continue de bandes de matériau (14, 16) à l'aide d'ultrasons, comportant une sonotrode configurée sous la forme de cylindre rotatif (22), un outil de contre-pression opposé radialement au cylindre rotatif (22), une pièce de transformation d'amplitude (24) apposée axialement sur le cylindre rotatif (22), et un convertisseur ultrasons (28) raccordé à la pièce de transformation d'amplitude (24), avec une alimentation en tension, moyennant quoi la longueur (l) du cylindre rotatif (22) correspond à une onde lambda/2 de l'oscillation forcée ou à un multiple de celle-ci (l = n · λ/2), moyennant quoi, sur l'outil de contre-pression, reposent au moins deux cylindres rotatifs (22) qui sont montés l'un derrière l'autre, et les deux cylindres (22) montés l'un derrière l'autre peuvent être décalés d'une valeur (Δl) l'un par rapport à l'autre dans la direction axiale, **caractérisé en ce que** la valeur (Δl) correspond à une onde lambda/4 de l'oscillation forcée (Δl = λ/4).

2. Dispositif selon la revendication 1, **caractérisé en ce que**, entre la pièce de transformation d'amplitude (24) et le cylindre rotatif (22), sont prévus des roulements à billes radiaux (26).

3. Dispositif selon l'une quelconque des revendications précédentes, **caractérisé en ce que**, des deux côtés du cylindre rotatif (22), sont prévus une pièce de transformation d'amplitude (24) et un convertisseur ultrasons (28).

4. Dispositif selon l'une quelconque des revendications précédentes, **caractérisé en ce que** l'outil de contre-pression est un cylindre de contre-pression rotatif (34).

5. Dispositif selon l'une quelconque des revendications précédentes, **caractérisé en ce que** la surface externe du cylindre rotatif (22) et/ou du cylindre de contre-pression (34) est lisse ou façonnée.

6. Dispositif selon l'une quelconque des revendications 1 à 4, **caractérisé en ce que** l'outil de contre-pression est fixe, et il s'agit en particulier d'un couteau, d'une lame ou similaire.

7. Dispositif selon la revendication 6, **caractérisé en ce que** le couteau, la lame ou similaire s'étendent dans la direction tangentielle par rapport au cylindre rotatif (22).

8. Dispositif selon l'une quelconque des revendications précédentes, **caractérisé en ce que** la hauteur de la fente fonctionnelle (18) entre le cylindre rotatif (22) et l'outil de contre-pression peut être réglée.

9. Dispositif selon l'une quelconque des revendications précédentes, **caractérisé en ce que** la pression exercée par le cylindre rotatif (22) sur la bande de matériau (14, 16) peut être réglée.

10. Dispositif selon l'une quelconque des revendications précédentes, **caractérisé en ce que** le cylindre rotatif (22) est formé par une douille (42) comportant respectivement un tourillon frontal (44).

11. Dispositif selon l'une quelconque des revendications précédentes, **caractérisé en ce que** le cylindre rotatif (22) peut être refroidi ou réchauffé.

12. Dispositif selon l'une quelconque des revendications précédentes, **caractérisé en ce que** le cylindre de contre-pression (34) est configuré sous la forme d'un cylindre actif avec une pièce de transformation d'amplitude (24) et un convertisseur ultrasons (28) raccordé à celle-ci.

13. Dispositif selon l'une quelconque des revendications précédentes, **caractérisé en ce que** le diamètre (D) du cylindre rotatif (22) est en partie rétréci.

14. Dispositif selon la revendication 13, **caractérisé en ce que** le rétrécissement (E), en termes de valeur, correspond à une partie d'une onde lambda/2 de l'oscillation forcée (E = |x| · λ/2).

15. Dispositif selon l'une quelconque des revendications précédentes, **caractérisé en ce que** le cylindre rotatif (22) est épaissi en termes de diamètre de telle sorte qu'on obtient une répartition régulière des forces de pression sur sa longueur.

16. Dispositif selon l'une quelconque des revendications précédentes, **caractérisé en ce que** le cylindre rotatif (22) présente un bombage.

17. Dispositif selon l'une quelconque des revendications précédentes, **caractérisé en ce que** la variation de diamètre du cylindre rotatif (22) correspond à la ligne de courbure.

18. Dispositif selon l'une quelconque des revendications précédentes, **caractérisé en ce que** les axes du cylindre rotatif (22) et de l'outil de contre-pression configuré sous la forme d'un cylindre de contre-pression (34) sont disposés en étant voilés l'un par rapport à l'autre.
